# FASCICULE DE BREVET EUROPEEN

(11) **EP 2 355 098 B1**
(45) Date de publication et mention de la délivrance du brevet: **18.05.2016**
(21) Numéro de dépôt: 11153709.8
(22) Date de dépôt: 08.02.2011
(51) Int. Cl.: G11B 5/127, G06K 7/08

(54) **Dispositif de lecture magnétique**
Vorrichtung zum magnetischen Lesen
Apparatus for magnetic reading

(30) Priorité: 10.02.2010 FR 1050938
(43) Date de publication de la demande: 10.08.2011
(73) Titulaire: Ingenico Group, 75015 Paris (FR)
(72) Inventeur: Berthiaud, Olivier, 07130 Cornas (FR)
(74) Mandataire: Thibon, Laurent

(56) Documents cités:
- EP-A1- 0 318 626
- EP-A2- 0 286 842
- FR-A1- 2 779 560

## Description

### Domaine de l'invention

La présente invention concerne un dispositif de lecture d'une piste magnétique. Elle vise plus particulièrement une tête de lecture magnétique d'un terminal de paiement électronique ou d'un lecteur de chèques.

### Exposé de l'art antérieur

Certains terminaux de paiement électronique sont adaptés à lire des cartes munies de pistes magnétiques, ou cartes magnétiques. Dans ce cas, il est prévu un lecteur de carte magnétique, ayant par exemple la forme d'une fente, ouverte à ses extrémités, dans laquelle un utilisateur peut faire défiler une carte magnétique. Une tête de lecture magnétique, connectée à un circuit imprimé du terminal, affleure une paroi interne de la fente. La tête de lecture permet de lire des données stockées sur une piste magnétique de la carte de l'utilisateur, lors du défilement de la carte dans la fente.

La figure 1 est une vue de face représentant de façon schématique une tête de lecture magnétique 1 telle qu'on peut en trouver dans les terminaux de paiement électronique actuels.

La figure 2 est une vue en coupe de la tête de lecture 1 selon le plan 2-2 de la figure 1.

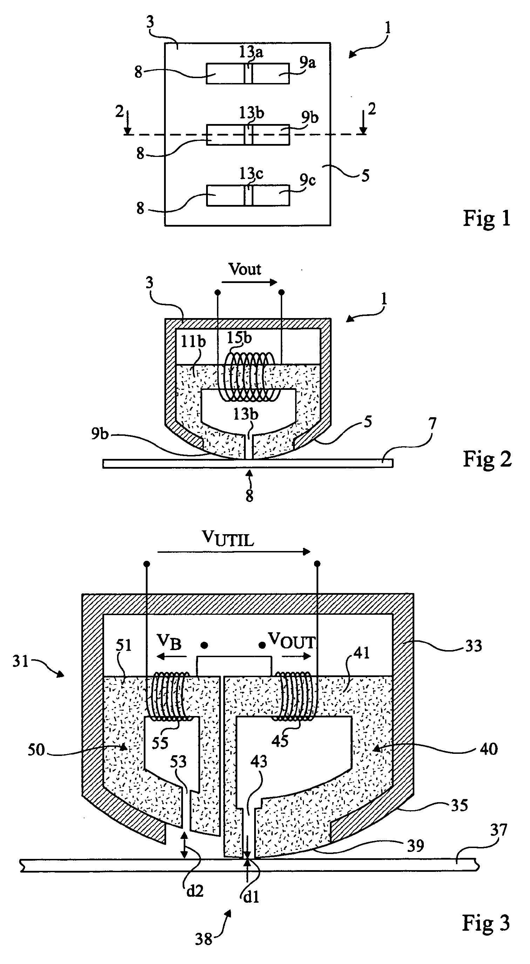

La tête de lecture 1 comprend un boîtier 3, de forme générale approximativement parallélépipédique, contenant notamment un ou plusieurs circuits électromagnétiques de lecture. Le boîtier 3, généralement métallique, comprend une face avant 5, destinée à affleurer une paroi interne de la fente du lecteur. La face avant 5 est légèrement bombée, de façon qu'une carte magnétique 7 (figure 2) puisse défiler contre cette face sans risquer d'accrocher le boîtier 3. La face avant 5 comprend une ou plusieurs fentes 8, horizontales (dans l'orientation de la figure 1), définissant des voies de lecture, trois voies 9a à 9c (figure 1) dans cet exemple, positionnées à des hauteurs différentes de façon à pouvoir lire sur des pistes magnétiques positionnées à des hauteurs différentes de la carte. Ceci permet notamment au lecteur d'être compatible avec différentes catégories de cartes magnétiques. Toutes les voies de lecture sont similaires, par exemple, au niveau de la voie 9b, le boîtier 3 contient un circuit magnétique de lecture comprenant un noyau magnétique 11b (figure 2) en forme d'anneau, disposé selon un plan parallèle aux faces inférieure et supérieure du boîtier (dans l'orientation de la figure 1). L'anneau 11b n'est pas fermé mais est interrompu par un entrefer amagnétique 13b, généralement constitué d'air ou d'un matériau amagnétique solide tel que du laiton ou une résine. L'entrefer 13b est en contact ou à très faible distance de la portion de la voie 9b au contact de laquelle est destinée à glisser la carte magnétique, et est généralement recouvert d'un vernis de protection. Un enroulement conducteur 15b est formé autour de la région de l'anneau opposée à l'entrefer 13b. En pratique, la hauteur de l'entrefer 13b est légèrement supérieure à la hauteur des pistes magnétiques susceptibles d'être lues. La largeur de l'entrefer est liée à la résolution d'écriture des données sur la piste magnétique. Dans le domaine des cartes magnétiques de paiement, la largeur de l'entrefer est généralement comprise entre 5 et 50 µm.

Des circuits magnétiques de lecture sont également associés aux voies de lecture 9a et 9c. Sur la figure 1, on a représenté les entrefers 13a et 13c des circuits magnétiques associés aux voies 9a et 9c. Pour améliorer la résistance mécanique de la tête, et/ou pour des raisons de sécurité, l'intérieur du boîtier 3 est généralement noyé dans une résine (non représentée) lors d'une étape finale de fabrication.

Le défilement d'une piste magnétique de la carte 7 devant l'entrefer 13 de la voie de lecture 9 concernée entraîne une variation de flux magnétique dans le noyau 11 correspondant. Il en résulte l'apparition d'un courant induit et donc une variation de la tension V_{OUT} aux bornes de l'enroulement 15. Les terminaux de paiement comprennent généralement un module de traitement, non représenté, pour extraire du signal V_{OUT} les informations stockées sur la piste magnétique.

Un inconvénient des têtes de lecture de ce type est qu'elles sont très sensibles aux perturbations électromagnétiques extérieures. Le signal V_{OUT} est donc bruité. Si la tête de lecture est utilisée dans un environnement fortement perturbé, il peut devenir impossible d'extraire du signal V_{OUT} les informations stockées sur la carte magnétique. Ceci peut notamment se produire dans un terminal de paiement électronique situé dans un magasin, à proximité d'un portillon de protection antivol. Dans le cas d'un lecteur magnétique motorisé de chèques, les moteurs d'entrainement de l'appareil sont également une source de perturbation de la tête de lecture. Par ailleurs, les divers appareils de télécommunications sans fil sont autant de sources de perturbation possibles pour les têtes de lecture.

Certains terminaux de paiement comprennent un module logiciel et/ou matériel de filtrage du bruit. Toutefois, outre le surcoût qu'entraîne la prévision d'un tel module, cette solution ne permet pas de s'affranchir totalement des perturbations extérieures, notamment lorsque les perturbations sont de forte amplitude et/ou génèrent des signaux parasites dans la même bande de fréquence que le signal utile.

On a également proposé des terminaux comprenant, outre la tête de lecture magnétique usuelle, une tête magnétique supplémentaire de mesure du bruit et un module de traitement de signal pour reconstituer, à partir des signaux fournis par la tête de lecture et par la tête de mesure du bruit, une estimation du signal utile non bruité. Un exemple de réalisation d'un tel terminal, adapté à la lecture magnétique de chèques, est décrit dans le document FR-A-2898726. Une telle solution présente l'inconvénient d'entrainer un surcoût et un encombrement non négligeables, liés à la présence de la tête de mesure supplémentaire et du module de traitement de signal.

Un autre exemple d'un dispositif de lecture d'une piste magnétique est décrit dans la demande de brevet FR2779560.

### Résumé

Ainsi, un objet d'un mode de réalisation de la présente invention est de prévoir un dispositif de lecture magnétique palliant au moins en partie certains des inconvénients des solutions de l'art antérieur.

Un autre objet d'un mode de réalisation de la présente invention est de prévoir un tel dispositif ne nécessitant aucun module de traitement de signal.

Un autre objet d'un mode de réalisation de la présente invention est de prévoir un tel dispositif de conception simple et peu encombrant.

Un autre objet d'un mode de réalisation de la présente invention est de prévoir une tête de lecture magnétique fournissant directement un signal indépendant d'éventuelles perturbations parasites.

Un autre objet d'un mode de réalisation de la présente invention est de prévoir une telle tête de lecture compatible avec les terminaux de paiement usuels.

Ainsi, un mode de réalisation de la présente invention prévoit un dispositif de lecture magnétique comportant : une tête de lecture magnétique comprenant un premier circuit magnétique fournissant, aux bornes d'un premier enroulement conducteur, un signal représentatif des variations de flux magnétique à une première distance d'une face avant de la tête ; et un second circuit magnétique fournissant, aux bornes d'un second enroulement conducteur connecté en opposition de phase au premier enroulement, un signal représentatif des variations de flux magnétique à une seconde distance, supérieure à la première distance, de la face avant de la tête, le second circuit magnétique étant dépourvu de noyau magnétique.

Selon un mode de réalisation, les premier et second enroulements sont connectés en série.

Selon un mode de réalisation, les premier et second enroulements sont connectés en parallèle.

Selon un mode de réalisation, le second enroulement est compris dans la tête de lecture.

Selon un mode de réalisation, le premier circuit magnétique comprend un premier anneau magnétique ouvert par un premier entrefer, le premier entrefer étant situé à la première distance de la face avant de la tête.

Selon un mode de réalisation, la seconde distance est supérieure de 0,3 à 3 mm à la première distance.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, représente de façon schématique la face avant d'une tête de lecture magnétique ;
la figure 2, précédemment décrite, est une vue en coupe de la tête de lecture selon le plan 2-2 de la figure 1 ;
la figure 3 est une vue en coupe représentant de façon schématique un exemple d'une tête de lecture magnétique adaptée à fournir un signal indépendant des perturbations de l'environnement ;

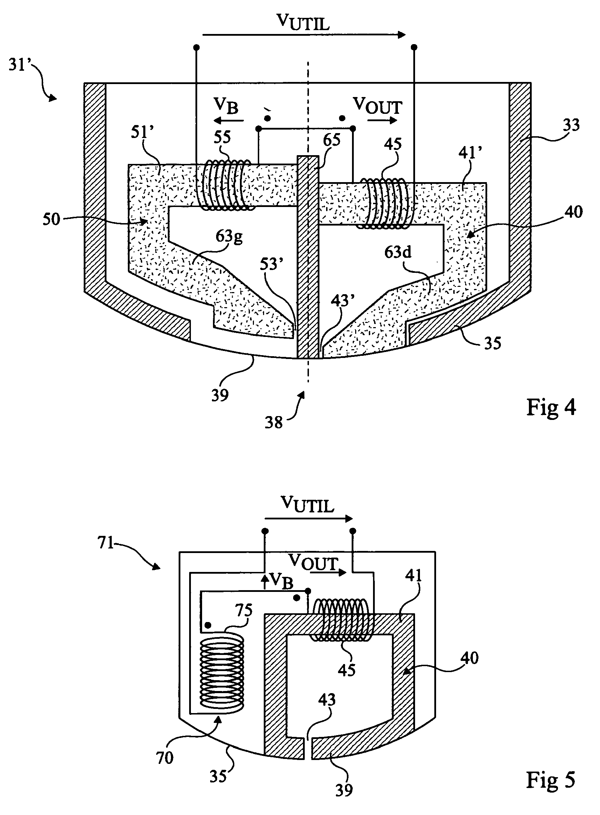

la figure 4 est une vue en coupe représentant de façon schématique une variante de réalisation de la tête de lecture de la figure 3 ;
la figure 5 est une vue en coupe dans le même plan que la figure 3, représentant très schématiquement un mode de réalisation d'une tête de lecture magnétique selon l'invention; et

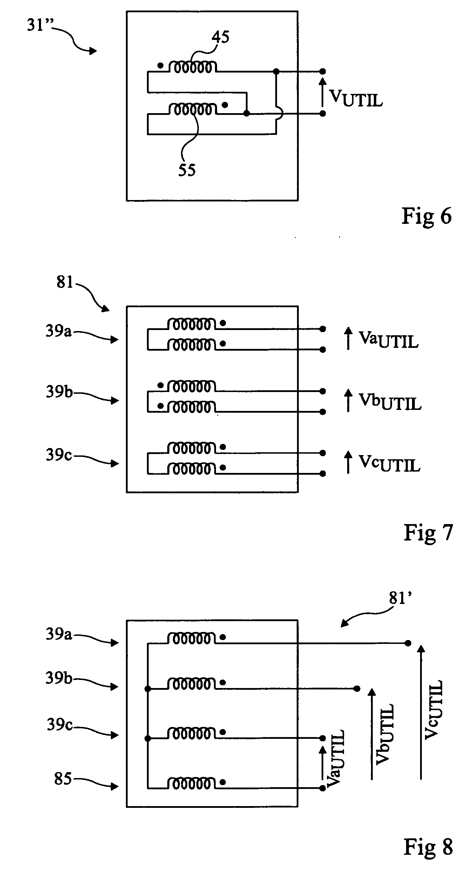

les figures 6 à 8 sont des schémas électriques illustrant diverses variantes de réalisation de têtes de lecture magnétique adaptées à fournir des signaux indépendant des perturbations de l'environnement.

### Description détaillée

Par souci de clarté, de mêmes éléments ont été désignés par de mêmes références aux différentes figures et, de plus, les diverses figures ne sont pas tracées à l'échelle. De plus, seuls les éléments utiles à la compréhension de l'invention ont été représentés et décrits.

Dans la présente description, on utilise les termes d'orientation et de positionnement "avant", "arrière, "inférieur", "supérieur", "hauteur", "largeur", "horizontal", "vertical", "centre" en se référant arbitrairement à une tête de lecture dans l'orientation de la figure 1.

La présente invention sera décrite en relation avec un exemple de dispositif adapté à la lecture de cartes magnétiques de paiement. Elle s'applique toutefois plus généralement à toute tête de lecture magnétique, par exemple dans les domaines de la lecture magnétique de chèques, de tickets de transport, de supports audio, de disques informatique, etc.

La figure 3 est une vue en coupe dans le même plan que la figure 2 représentant de façon schématique un exemple de réalisation d'une tête de lecture magnétique 31 adaptée à fournir directement un signal indépendant des perturbations électromagnétiques de l'environnement.

La tête 31 a une forme générale sensiblement identique à celle de la tête de lecture 1 des figures 1 et 2. Elle comprend un boîtier 33, par exemple métallique, contenant notamment un ou plusieurs circuits électromagnétiques de lecture. Le boîtier 33 comprend une face avant 35, de section transversale (dans le plan de la figure) légèrement bombée, comprenant des fentes 38 parallèles entre elles définissant des voies de lecture (une seule voie de lecture 39 est visible sur la figure 3).

Le boîtier 33 contient au moins un premier circuit magnétique 40, comprenant un noyau magnétique 41 en forme d'anneau, définissant la voie 39, et disposé selon un plan sensiblement parallèle aux faces inférieure et supérieure du boîtier. L'anneau 41 est ouvert par un entrefer amagnétique 43, par exemple d'air, de vide, ou d'un matériau amagnétique solide tel que du laiton, une résine, ou tout autre matériau adapté. L'entrefer 43 est situé en contact ou à très faible distance de la portion de voie 39 devant laquelle est destinée à glisser une carte magnétique 37. En d'autres termes, l'entrefer 43 est situé à une distance d1 très faible, par exemple inférieure à 0,5 mm, de la portion de face avant au contact de laquelle la carte 37 est destinée à défiler. Dans cet exemple, l'entrefer 43 est positionné sensiblement au centre de la fente 38 définissant la voie de lecture 39. Un enroulement conducteur 45 est formé autour de l'anneau 41, par exemple autour de la région de l'anneau 41 opposée à l'entrefer 43.

A la différence de la tête de lecture 1 de la figure 2, le noyau magnétique 41 du circuit magnétique 40 n'occupe pas toute la largeur de la tête de lecture. Au niveau de la voie de lecture 39, dans le même plan que le circuit magnétique 40, le boîtier 33 contient en outre un second circuit magnétique 50. Le circuit 50 comprend un noyau magnétique 51 en forme d'anneau, ouvert par un entrefer amagnétique 53. L'entrefer 53 est situé du côté de la fente 38, relativement proche de l'entrefer 43. Toutefois, l'entrefer 53 est situé à une distance d2, supérieure à la distance d1, de la face avant de la tête de lecture. Plus généralement, la tête de lecture 31 est telle que lors du défilement d'une carte magnétique devant la voie de lecture 39, l'entrefer 53 se trouve plus éloigné de la piste magnétique lue que l'entrefer 43. A titre d'exemple, la distance entre l'entrefer 53 et la carte 37 pourra être supérieure de 0,3 à 3 mm à la distance entre l'entrefer 43 et la carte 37. Un enroulement conducteur 55 est formé autour de l'anneau 51, par exemple autour de la région de l'anneau 51 opposée à l'entrefer 53.

Le défilement d'une piste magnétique de la carte 37 devant l'entrefer 43 entraîne une variation de flux magnétique dans le noyau 41 du circuit magnétique 40. Il en résulte l'apparition d'un courant induit dans l'enroulement conducteur 45 et donc une variation de la tension V_{OUT} aux bornes de l'enroulement 45. Comme dans le cas de la tête de lecture décrite en relation avec la figure 2, le signal V_{OUT} est bruité. Il est en fait la somme d'un signal utile V_{UTIL}, représentatif des variations de flux magnétique induites par le défilement de la piste magnétique devant l'entrefer, et d'un signal de bruit V_{B}, représentatif des variations de flux magnétique induites par des perturbations extérieures.

La distance entre l'entrefer 53 du second circuit magnétique 50 et la carte magnétique est telle que le défilement de la piste magnétique devant la voie 39 n'entraîne aucune variation sensible du flux magnétique dans le noyau 51. Ainsi, la tension aux bornes de l'enroulement 55 représente uniquement les variations de flux magnétique induites par les perturbations de l'environnement. Cette tension correspond sensiblement à la composante V_{B} du signal V_{OUT}. En pratique, si la distance entre la piste magnétique et l'entrefer 53 est supérieure à 1 mm, le défilement de la piste magnétique devant l'entrefer n'entraine aucune variation sensible du flux magnétique dans le noyau 51.

Les enroulements 45 et 55 sont connectés en opposition de phase. On désigne par une connexion en opposition de phase le fait que les tensions induites aux bornes des enroulements par une même variation de flux magnétique sont en opposition de phase. En pratique, cela signifie que les courants induits parcourent les enroulements selon des sens de rotation opposés (symbolisés par les positions des points de phase). Dans l'exemple de la figure 3, les enroulements 45 et 55 sont connectés en série et disposés selon une même direction, mais ont des sens d'enroulement opposés. Il en résulte que les courants induits dans les enroulements 45 et 55 par les perturbations de l'environnement s'annulent. Ainsi, lors du défilement d'une piste magnétique devant la voie 39, le dipôle formé par la mise en série des enroulements 45 et 55 fournit directement à ses bornes un signal V_{UTIL} = V_{OUT} - V_{B}, représentatif des variations de flux magnétique liées au défilement de la carte magnétique devant l'entrefer 43, indépendamment de toute perturbation extérieure. Dans cet exemple, les noyaux magnétiques 41 et 51 sont en contact l'un de l'autre, toutefois, l'invention ne se restreint pas à ce cas particulier.

Un avantage d'une telle tête de lecture magnétique est qu'elle permet de fournir un signal sensiblement indépendant des perturbations de l'environnement, et ce quelle que soit l'intensité et la bande de fréquences des perturbations. Une telle tête de lecture présente les avantages d'être de conception simple, de ne nécessiter aucun module de filtrage et/ou de traitement de signal supplémentaire, et d'être directement compatible avec les terminaux de paiement existant. De plus, la forme générale de la tête de lecture et les dimensions de la tête de lecture sont sensiblement identiques à celles des têtes de lecture usuelles.

La figure 4 est une vue en coupe dans le même plan que la figure 3 représentant de façon schématique une variante de réalisation 31' de la tête de lecture 31 décrite en relation avec la figure 3. Une différence entre la tête 31' et la tête 31 réside dans l'agencement géométrique des noyaux magnétiques en anneau. Dans la tête 31', les anneaux magnétiques sont formés à partir de deux pièces magnétiques identiques 63g et 63d, sensiblement en forme de U. Les pièces 63g et 63d en U sont placées de part et d'autre d'une tige rectiligne magnétique centrale 65, de façon que la pièce 65 ferme les deux U formés par les pièces 63g et 63d. Du côté de la fente 38, l'extrémité de chaque U est séparée de la pièce 65 par un entrefer. Dans le circuit magnétique de mesure du bruit 50 (côté gauche de la figure), la pièce 63g en U est légèrement plus éloignée de la face avant de la tête que dans le circuit magnétique 40 de lecture du signal. Ainsi, l'entrefer 53' du circuit 50 est plus éloigné de la région de passage de la carte magnétique que l'entrefer 43' du circuit 40.

Un avantage d'une telle tête de lecture est que sa réalisation en série est facilitée par le fait que les noyaux des circuits magnétique de lecture du signal utile et de mesure du bruit sont réalisés à partir de pièces 63g, 63d identiques.

A titre d'exemple, les circuits magnétiques 40 et 50 ont des caractéristiques similaires. En particulier, les impédances, les dimensions des entrefers, et le nombre de spires des enroulements, sont approximativement identiques. En outre, les enroulements 45 et 55 sont disposés selon des directions parallèles ou confondues. De plus, l'entrefer 53 est disposé à proximité de l'entrefer 43, de façon à mesurer un signal de bruit V_{B} le plus proche possible du bruit venant affecter le signal utile.

La figure 5 est une vue en coupe dans le même plan que la figure 3, représentant très schématiquement un mode de réalisation d'une tête de lecture 71 selon l'invention. La tête 71 comprend un circuit magnétique 70 de mesure du bruit dont un enroulement 75 comporte approximativement le même nombre de spires que l'enroulement 45 du circuit 40. Le circuit 70 est dépourvu de noyau magnétique. Dans cet exemple, l'enroulement 75 est disposé selon une direction orthogonale à la direction de l'enroulement 45. L'enroulement 75 pourrait être disposé selon toute autre direction et/ou selon tout autre plan. Les enroulements 75 et 45 sont reliés en opposition de phase, par exemple en série.

Dans la tête 71, le signal de bruit V_{B} fourni par le circuit de mesure de bruit est moins représentatif du bruit venant affecter le signal utile V_{OUT} que dans le cas de la tête 31 de la figure 3. Toutefois, la tête 71 fournit, aux bornes du dipôle formé par la mise en série des enroulements 75 et 45, un signal V_{UTIL} nettement moins sensible aux perturbations parasites que les signaux de sortie des têtes de lecture usuelles. Un tel mode de réalisation présente l'avantage d'être particulièrement simple à mettre en oeuvre.

D'autres modes de réalisation et d'autres agencements du circuit magnétique de mesure du bruit pourront être prévus. En particulier, le nombre de spires de l'enroulement 75 pourra être différent du nombre de spires de l'enroulement 45. De façon générale, le circuit magnétique de mesure du bruit est suffisamment plus éloigné de la face avant de la tête de lecture que le circuit 40 de mesure de signal, afin de ne pas être sensible aux variations de flux magnétique liées au défilement d'une carte magnétique devant la face avant de la tête de lecture.

Selon une variante de réalisation, le circuit magnétique de mesure du bruit est situé à l'extérieur de la tête de lecture, par exemple sur une carte de circuit imprimé du terminal de paiement. Un tel mode de réalisation présente l'avantage d'être particulièrement simple à mettre en oeuvre. La tête de lecture est alors une tête usuelle, du type décrit en relation avec les figures 1 et 2, le cordon de connexion de la tête étant utilisé pour connecter l'enroulement du circuit magnétique de mesure du signal à l'enroulement du circuit magnétique externe de mesure du bruit.

La figure 6 est un schéma électrique équivalent d'un autre mode de réalisation d'une tête de lecture 31'' structurellement identique à la tête 31 de la figure 3. Dans la tête 31'', les enroulements 45 et 55 sont reliés en parallèle en opposition de phase. Le signal V_{UTIL} de sortie de la tête 31'', représentatif des variations de flux magnétique liées au défilement de la piste magnétique indépendamment des perturbations extérieures, est lu aux bornes du dipôle formé par la mise en parallèle des enroulements.

La figure 7 est un schéma électrique équivalent d'une variante de réalisation d'une tête de lecture 81. La tête 81 comprend trois voies de lecture 39a, 39b, 39c. A chaque voie est associé un circuit magnétique de lecture du signal bruité et un circuit magnétique de mesure du bruit. Pour chaque voie, les enroulements des circuits de lecture du signal utile et de mesure du bruit sont reliés en série et en opposition de phase. La tête 81 fournit des signaux Va_{UTIL}, Vb_{UTIL}, Vc_{UTIL}, respectivement représentatifs des variations de flux magnétique liées au défilement de pistes magnétiques devant les voies 39a, 39b, 39c. Chaque signal Va_{UTIL}, Vb_{UTIL}, Vc_{UTIL} est lu aux bornes du dipôle formé par la mise en série des enroulements associés à la voie correspondante.

La figure 8 est un schéma électrique équivalent d'une autre variante de réalisation 81' de la tête de lecture de la figure 7. La tête 81' comprend trois voies de lecture 39a, 39b, 39c. A chaque voie est associé un circuit magnétique de lecture du signal bruité du type décrit en relation avec la figure 2. La tête 81' comprend en outre un circuit magnétique 85 de mesure du bruit, par exemple un circuit magnétique du type décrit en relation avec la figure 2, mais dont l'entrefer se trouve légèrement en retrait de la face avant de la tête de lecture, de façon que le défilement d'une piste magnétique devant la face avant de la tête de lecture n'entraine aucune variation de flux magnétique dans le circuit 85. L'enroulement du circuit de mesure de bruit 85 est relié en série et en opposition de phase à chacun des enroulements des circuits de lecture de signal associés aux zones de lecture 39a, 39b, 39c. La tête 81' fournit des signaux de sortie Va_{UTIL}, Vb_{UTIL}, Vc_{UTIL}, respectivement représentatifs des variations de flux magnétique liées au défilement de pistes magnétiques devant les voies 39a, 39b, 39c. Chaque signal Va_{UTIL}, Vb_{UTIL}, Vc_{UTIL} est lu aux bornes du dipôle formé par la mise en série des enroulements correspondants.

Le circuit magnétique commun de mesure du bruit 85 pourra être placé soit au niveau d'une quatrième voie de lecture virtuelle, dans un plan distinct des zones de lecture 39a à 39c, soit au niveau de l'une des zones de lecture 39a à 39c, selon un agencement du type décrit en relation avec les figures 3 et 4, soit à l'extérieur de la tête de lecture. Selon une variante de réalisation, si le circuit 85 est placé dans un plan distinct des zones de lecture 39a à 39c, son entrefer ne sera pas nécessairement en retrait de la face avant. En effet, dans ce cas, le décalage de hauteur peut suffire à rendre le circuit 85 insensible aux variations de flux magnétique liées au défilement de la carte magnétique devant la face avant.

Des modes de réalisation particuliers de la présente invention ont été décrits. Diverses variantes et modifications apparaîtront à l'homme de l'art.

En particulier, on notera que pour chacun des modes de réalisation décrits en relation avec les figures 6 à 8, on pourra prévoir des variantes dans lesquelles les connexions électriques des enroulements en opposition de phase, sont effectuées à l'extérieur de la tête de lecture.

En outre, l'homme de l'art saura mettre en oeuvre le fonctionnement recherché quel que soit le nombre de zones de lecture.

Par ailleurs, bien que la description ci-dessus porte uniquement sur des têtes de lecture, l'homme de l'art saura mettre en oeuvre le fonctionnement recherché dans des têtes d'écriture magnétique.

## Revendications

1. Dispositif de lecture magnétique comportant :
une tête de lecture magnétique (71 ; 81) comprenant un premier circuit magnétique (40) fournissant, aux bornes d'un premier enroulement conducteur (45), un signal (V_{OUT}) représentatif des variations de flux magnétique à une première distance (d1) d'une face avant de la tête ; et
un second circuit magnétique (70) fournissant, aux bornes d'un second enroulement conducteur (75) connecté en opposition de phase au premier enroulement, un signal (V_{B}) représentatif des variations de flux magnétique à une seconde distance (d2), supérieure à la première distance, de la face avant de la tête,
**caractérisé en ce que** le second circuit magnétique (70) est dépourvu de noyau magnétique.

2. Dispositif selon la revendication 1, dans lequel les premier et second enroulements sont connectés en série.

3. Dispositif (31'') selon la revendication 1, dans lequel les premier et second enroulements sont connectés en parallèle.

4. Dispositif (31 ; 71 ; 81) selon l'une quelconque des revendications 1 à 3, dans lequel le second enroulement est compris dans la tête de lecture.

5. Dispositif (31 ; 71) selon l'une quelconque des revendications 1 à 4, dans lequel le premier circuit magnétique (40) comprend un premier anneau magnétique (41) ouvert par un premier entrefer (43), le premier entrefer étant situé à la première distance (d1) de la face avant de la tête.

6. Dispositif selon l'une quelconque des revendications 1 à 5, dans lequel la seconde distance est supérieure de 0,3 à 3 mm à la première distance.

## Patentansprüche

1. Eine Vorrichtung zum magnetischen Lesen, die folgendes aufweist:
einen magnetischen Lesekopf (71; 81), der einen ersten Magnetkreis (40) aufweist, der an den Klemmen einer ersten leitenden Wicklung (45) ein Signal (V_{OUT}) liefert, welches repräsentativ ist für Magnetflussveränderungen an einem ersten Abstand (d1) einer vorderen Stirnfläche des Kopfes; und
einen zweiten Magnetkreis (70), der an den Klemmen einer zweiten, im Phasengegensatz zur ersten Wicklung geschalteten, leitenden Wicklung (75) ein Signal (VB) liefert, welches repräsentativ ist für Magnetflussvariationen an einem zweiten Abstand (d2), von der vorderen Stirnfläche des Kopfes, der größer ist als der erste Abstand,
**dadurch gekennzeichnet, dass** der zweite Magnetkreis (70) keinen magnetischen Kern besitzt.

2. Die Vorrichtung nach Anspruch 1, wobei die ersten und zweiten Wicklungen in Serie geschaltet sind.

3. Die Vorrichtung (31'') nach Anspruch 1, wobei die ersten und zweiten Wicklungen parallel geschaltet sind.

4. Die Vorrichtung (31; 71; 81) nach einem der Ansprüche 1 bis 3, wobei der Lesekopf die zweite Wicklung aufweist.

5. Die Vorrichtung (31; 71) nach einem der Ansprüche 1 bis 4, wobei die erste Magnetschaltung (40) einen ersten Magnetring (41) aufweist, der durch einen ersten Spalt (43) offen ist, wobei der erste Spalt mit einem ersten Abstand (d1) von der vorderen Oberfläche des Kopfes angeordnet ist.

6. Die Vorrichtung nach einem der Ansprüche 1 bis 5, wobei der zweite Abstand um von 0,3 bis 3 Millimeter größer ist als der erste Abstand.

## Claims

1. A magnetic read device, comprising:
a magnetic read head (71; 81) comprising a first magnetic circuit (40) providing, at the terminals of a first conductive winding (45), a signal (V_{OUT}) representative of magnetic flux variations at a first distance (d1) of a front face of the head; and
a second magnetic circuit (70) providing, at the terminals of a second conductive winding (75) connected in phase opposition to the first winding, a signal (V_{B}) representative of magnetic flux variations at a second distance (d2), greater than the first distance, from the front face of the head,
**characterized in that** the second magnetic circuit (70) has no magnetic core.

2. The device of claim 1, wherein the first and second windings are series-connected.

3. The device (31'') of claim 1, wherein the first and second windings are connected in parallel.

4. The device (31; 71; 81) of any of claims 1 to 3, wherein the second winding is comprised in the read head.

5. The device (31; 71) of any of claims 1 to 4, wherein the first magnetic circuit (40) comprises a first magnetic ring (41) opened by a first gap (43), the first gap being located at the first distance (d1) from the front surface of the head.

6. The device of any of claims 1 to 5, wherein the second distance is greater by from 0.3 to 3 mm than the first distance.
